(19) Europäisches Patentamt
European Patent Office
Office européen des brevets

(11) Veröffentlichungsnummer : **0 410 242 B1**

(12) **EUROPÄISCHE PATENTSCHRIFT**

(45) Veröffentlichungstag der Patentschrift : **18.08.93 Patentblatt 93/33**

(51) Int. Cl.$^5$ : **C09D 5/03,** C09D 175/14, C08F 299/06

(21) Anmeldenummer : **90113513.7**

(22) Anmeldetag : **14.07.90**

(54) **Verwendung von (Meth) Acryloylgruppen aufweisenden Polyurethanen als Bindemittel für Pulverlacke.**

(30) Priorität : **26.07.89 DE 3924679**

(43) Veröffentlichungstag der Anmeldung : **30.01.91 Patentblatt 91/05**

(45) Bekanntmachung des Hinweises auf die Patenterteilung : **18.08.93 Patentblatt 93/33**

(84) Benannte Vertragsstaaten : **BE DE ES FR GB IT NL**

(56) Entgegenhaltungen :
**EP-A- 0 168 173**
**FR-A- 2 393 827**
**US-A- 4 716 209**

(73) Patentinhaber : **BAYER AG**
**D-51368 Leverkusen (DE)**

(72) Erfinder : **Meixner, Jürgen, Dr.**
**Josef-Brocker-Dyk 56**
**D-4150 Krefeld (DE)**
Erfinder : **Pedain, Josef, Dr.**
**Haferkamp 6**
**D-5000 Koeln 80 (DE)**
Erfinder : **Höhlein, Peter, Dr.**
**Windmühlenweg 3e**
**D-4152 Kempen 3 (DE)**
Erfinder : **Kreuder, Hans-Joachim. Dr.**
**Auf Rothenfeld 23a**
**D-4154 Tönisvorst 2 (DE)**

**EP 0 410 242 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft die Verwendung von bestimmten, pulverförmigen (Meth)Acryloylgruppen aufweisenden Polyurethanen als Bindemittel in Pulverlacken, die unter dem Einfluß von Hitze und/oder energiereicher Strahlung ausgehärtet werden können.

Pulverförmige Überzugsmittel sind bekannt. Es handelt sich dabei meist um Zweikomponenten-Überzugsmassen auf Basis von Polyhydroxylverbindungen sowie Polycarboxylverbindungen und geeigneten reaktionsfähigen polyfunktionellen Verbindungen (Vernetzern).

Es werden auch kristalline ungesättigte Polyesterharze beschrieben (z.B.: EP-A 98 655 und EP-A 188 846), die bei hohen Temperaturen mit Hilfe von Peroxiden vernetzen. Die mit Peroxid vermischten, ungesättigten Polyesterharze sind nicht lagerstabil. Dies gilt auch für peroxidhaltige, pulverförmige Mischungen, die ungesättigte Acrylatgruppen enthalten, wie sie in der DE-OS 2 647 700 beschrieben werden.

Es war die der Erfindung zugrundeliegende Aufgabe, neue Pulverlack-Bindemittel bereitzustellen, die ohne zusätzliche Vernetzerkomponente oder Peroxide vernetzt werden können und daher eine hohe Lagerstabilität besitzen. Gleichzeitig sollten die unter Verwendung der neuen Pulverlack-Bindemittel hergestellten Überzüge ausgezeichnete lacktechnische Eigenschaften, insbesondere hohe Härte, Lösungsmittel- und Kratzfestigkeit, aufweisen.

Die Aufgabe konnte mit der nachstehend näher beschriebenen erfindungsgemäßen Verwendung von ausgewählten Acryloylgruppen aufweisenden Polyurethanen gelöst werden.

Gegenstand der Erfindung ist die Verwendung von (Meth)Acryloylgruppen aufweisenden Polyurethanen, die innerhalb des Temperaturbereichs von 50-180°C schmelzen, einen Gehalt an olefinischen Doppelbindungen in Form von (Meth)Acryloylgruppen (berechnet als =C=C=, Molekulargewicht = 24) von 3 bis 10 Gew.-% aufweisen, und durch Umsetzung von

A) 40-80 Gew.-Teilen einer Polyisocyanatkomponente, bestehend aus mindestens einem organischen Polyisocyanat, mit

B) 15-50 Gew.-Teilen einer (Meth)Acryloylgruppen aufweisenden Alkoholkomponente, bestehend aus mindestens einem (Meth)Acryloylgruppen-aufweisenden, einwertigen Alkohol, und

Auch olefinisch ungesättigte Polyurethane sind bereits bekannt (FR-A-2 393 827). Diese von den nachstehend näher beschriebenen erfindungsgemäßen Bindemitteln auch bezüglich ihrer chemischen Zusammensetzung unterschiedlichen Polyurethane werden gemäß Vorveröffentlichung in Kombination mit Vernetzern in lösungsmittelhaltigen Lacken für vulkanisierten Polyalkylenkautschuk eingesetzt.

C) 2-20 Gew.-Teilen einer weiteren Aufbaukomponente, bestehend aus mindestens einer (Meth)Acryloylgruppen-freien Verbindung mit gegenüber Isotyanatgruppen reaktionsfähigen Gruppen

hergestellt worden sind, als ohne Vernetzerkomponente vernetzbare Bindemittel für unter dem Einfluß von Hitze und/oder energiereicher Strahlung aushärtbare Pulverlacke.

Die erfindungsgemäß zu verwendenden Polyurethane schmelzen innerhalb des Temperaturbreichs von 50-180°C, d.h. sie weisen einen innerhalb dieses Temperaturbereichs liegenden Schmelzbereich auf, Außerdem weisen sie den obengenannten Gehalt an olefinischen Doppelbindungen in Form von (Meth)Acryloylgruppen auf.

Die Herstellung der erfindungsgemäß zu verwendenden Polyurethane erfolgt durch Umsetzung der obengenannten Ausgangskomponenten A) - C), wobei Art- und Mengenverhältnisse dieser Ausgangskomponenten vorzugsweise so gewählt werden, daß praktisth Isotyanatgruppen-freie Polyurethane mit einem als Zahlenmittel bestimmten Molekulargewicht von 800 bis 10.000 resultieren.

Die Komponente A) besteht aus mindestens einem organischen Polyisocyanat, Geeignete Polyisocyanate sind beliebige, aus der Polyurethanchemie an sich bekannte, organische Polyisocyanate mit aliphatisch, cycloaliphatisch und/oder aromatisch gebundenen Isotyanatgruppen, die vorzugsweise ein Molekulargewicht von 168 bis 1.000, vorzugsweise 168 bis 300 aufweisen. Geeignet sind beispielsweise 1-Isocyanato-3,3,5-trimethyl-5-isocyanatomethyl-cyclohexan, (Isophorondiisocyanat,: IPDI), 4,4'-Diisocyanatodicyclohexylmethan, 4,4'-Diisocyanatodiphenylmethan, dessen technische Gemische mit 2,4-Diisocyanatodiphenylmethan und gegebenenfalls den höheren Homologen dieser Diisocyanate, 2,4-Diisocyanatotoluol und dessen technische Gemische mit 2,6-Diisocyanatotoluol.

Ebenfalls geeignet sind Biuret-, Isocyanurat- oder Urethan-modifizierte Polyisocyanate auf Basis dieser einfachen Polyisocyanate. Diese Derivate weisen im allgemeinen ein Molekulargewicht bis ca. 1.000 auf. Die Herstellung derartiger Derivate ist beispielsweise in US-PS 3 124 605, US-PS 3 183 112, US-PS 3 919 218 oder US-PS 4 324 879 beschrieben.

Bevorzugt werden als Komponente A) 2,4-Diisocyanatotoluol oder dessen technische Gemische mit bis zu 35 Gew.-%, bezogen auf Gemisch, an 2,6-Diisocyanatotoluol, IPDI und/oder durch Trimerisierung von IPDI erhaltene Isocyanuratgruppen aufweisende Polyisocyanate verwendet.

Die Komponente B) besteht aus mindestens einem (Meth)Acryloylgruppen aufweisenden, einwertigen Alkohol. Hierunter sind insbesondere Hydroxyalkylester der Acrylsäure oder Methacrylsäure mit vorzugsweise 2-4 Kohlenstoffatomen im Hydroxyalkylrest wie Hydroxyethyl(meth)acrylat, 2- und 3-Hydroxypropyl(meth)acrylat, 2-, 3- und 4-Hydroxybutyl(meth)acrylat zu verstehen.

Die Komponente C) besteht aus mindestens einer (Meth)Acryloylgruppen-freien organischen Verbindung mit mindestens zwei gegenüber Isocyanatgruppen reaktionsfähigen Gruppen, insbesondere mindestens zwei, vorzugsweise 2-4 und besonders bevorzugt 2-3 alkoholischen Hydroxylgruppen. Die als Komponente C) bzw. als Teil der Komponente C) besonders gut geeigneten Verbindungen weisen ein Molekulargewicht von 62-200 auf. Beispielhaft genannt seien Ethylenglykol, 1,2- und 1,3-Propandiol, Neopentylglykol, Glycerin, Trimethylolpropan und Pentaerythrit. Weiterhin als Komponente C) bzw. als Teil der Komponente C) geeignet, jedoch weniger bevorzugt, sind die aus der Polyurethanchemie an sich bekannten höher molekularen Verbindungen, mit gegenüber Isocyanatgruppen reaktionsfähigen Gruppen, insbesondere Hydroxylgruppen, wie beispielsweise die bekannten Polyhydroxypolyether oder -polyester eines über 200 liegenden Molekulargewichts. Die Mitverwendung derartiger Aufbaukomponenten ist jedoch allenfalls in untergeordneten Mengen möglich, da sonst die erfindungswesentliche Bedingung bezüglich des Schmelzbereichs der Polyurethane nicht erfüllt werden kann.

Die Herstellung der Polyurethane durch Umsetzung der genannten Ausgangskomponenten kann in inerten Lösungsmiteln, wie beispielsweise Aceton, Ethylacetat, Butylacetat oder Toluol erfolgen, wobei vorzugsweise Reaktionstemperaturem von 20 bis 100°C, insbesondere 20 bis 80°C eingehalten werden. Vorzugsweise wird so vorgegangen, daß zunächst in einem ersten Reaktionsschritt die Umsetzung zwischen der Komponente A) und der Komponente B) durchgeführt wird, worauf sich die Umsetzung des so erhaltenen Umsetzungsprodukte mit der Komponente C) anschließt.

In der Praxis kann somit beispielsweise so vorgegangen werden, daß das Polyisocyanat vorgelegt und unter milden Bedingungen, z.B. innerhalb der obengenannten Temperaturbereiche mit dem ungesättigtem Monoalkohol B) umgesetzt wird, worauf sich die Umsetzung mit der weiteren Komponente C) ebenfalls innerhalb der genannten Temperaturbereiche anschließt, bis der NCO-Gehalt auf unter 0,1 Gew.-% abgefallen ist.

Die zum Polyurethan führende Additionsreaktion kann in an sich bekannter Weise mittels geeigneter Katalysatoren wie beispielsweise Zinnoctoat, Dibutylzinndilaurat oder tertiären Aminen wie Dimethylbenzylamin beschleunigt werden. Das als Umsetzungsprodukt anfallende Polyurethan bzw. Urethanacrylat kann andererseits durch Zugabe geeigneter Inhibitoren und Antioxidantien wie beispielsweise Phenole und/oder Hydrochinone
in Mengen von jeweils 0,001 bis 0,3 Gew.-%, bezogen auf Polyurethan, vor vorzeitiger und unerwünschter Polymerisation geschützt werden. Der Zusatz dieser Hilfsmittel kann vor, gleichzeitig und/oder im Anschluß an die zum Polyurethan führende Umsetzung erfolgen.

Nach beendeter Umsetzung wird das verwendete Lösungsmittel wieder entfernt. Dies kann z.B. durch Erwärmen der Reaktionslösung unter Vakuum auf 60 - 100°C geschehen. Die Polyurethane sollten nicht mehr als 1-2 % Restlösungsmittel enthalten.

Die auf diese Weise erhaltenen Polyurethane bzw Urethanacrylate stellen wertvolle Bindemittel für Pulverlacke dar. Sie können ohne weitere Zusätze als Hitzevernetzbare Pulver-Klarlacke verarbeitet werden (in welchem Falle das Bindemittel mit dem Überzugsmittel identisch wäre) oder, vorzugsweise, mit den aus der Lacktechnologie üblichen Hilfs- und Zusatzmitteln, wie beispielsweise Pigmenten, wie z.B. Titandioxid, Verlaufsmitteln, wie z.B. Polybutylacrylat oder Siliconen und/ oder anderen Zusatzstoffen versehen und z.B. auf Extrudern oder Knetern bei Temperaturen von ca. 80 bis 140, vorzugsweise 100-120°C, homogenisiert werden. Der hierbei anfallende Feststoff wird dann in an sich bekannter Weise gemahlen und durch Sieben von groben Kornanteilen, vorzugsweise zumindest von solchen mit einer oberhalb 0,1 mm liegenden Korngröße befreit.

Die so hergestellten pulverförmigen Überzugsmittel können nach üblichen Pulverauftragsverfahren, wie z.B. elektrostatischem Pulversprühen oder Wirbelsintern, auf die zu überziehenden Formteile aufgebracht werden. Die Härtung der Überzüge kann entweder durch Erhitzen auf Temperatur von 130 - 220°C, vorzugsweise 150 - 190°C, oder durch die Einwirkung von energiereicher Strahlung wie UV- oder Elektronenstrahlen erfolgen.

Im Falle der Vernetzung mittels UV-Bestrahlung ist es notwendig, den Überzugsmassen vor der Homogenisierung Fotoinitiatoren hinzuzufügen.

Als Fotoinitiatoren sind die üblicherweise eingesetzten Verbindungen geeignet, wenn sie pulverisierbar sind.

Beispiele hierfür sind 1-Hydroxycyclohexylphenylketon, Benzildimethylketal oder - bei pigmentierten Systemen - 2-Methyl-1-(4-(methylthio)phenyl 2 morpholino propanon-1 oder Trimethyl-benzoyl-diphenyl-phosphinoxid.

Die erwähnten Fotoinitiatoren, die in Mengen zwischen 0,1 und 10 Gew.-%, vorzugsweise 0,1 bis 5 Gew.-%, bezogen auf das Gewicht der Polyurethane, eingesetzt werden, können als einzelne Substanz oder, wegen häufiger vorteilhafter synergistischer Effekte, auch in Kombination miteinander verwendet werden.

In den nachfolgenden Beispielen beziehen sich alle Prozentangaben auf das Gewicht.

## Beispiele

Die in der Tabelle 1 aufgeführten Polyisocyanate A) werden jeweils zusammen mit 0,1 % 2,5-Di-t.-butyl-p-kresol und 0,2 % Zinndioctoat in Ethylacetat gelöst.

Das Ethylacetat wird hierbei in einer solchen Menge eingesetzt, daß ein Festgehalt, der sich auf die Gesamteinwaage bezieht, von 60 % resultiert. Daraufhin werden die in der Tabelle 1 genannten einwertigen Alkohole B) so zugetropft, daß die Temperatur nicht über 70°C ansteigt. Anschließend werden die jeweiligen Komponenten C) zugegeben und die Mischung bei 60°C solange gehalten bis der NCO-Gehalt auf kleiner 0,1 Gew.-% gesunken ist. Danach wird das Lösungsmittel bei 70 - 80°C im Vakuum (ca. 15 mbar) abgezogen bis ein Festgehalt von ca. 99 % erreicht ist.

Tabelle 1

| Einwaage (%) | Beispiele 1 | 2 | 3 | 4 | 5 | 6 |
|---|---|---|---|---|---|---|
| A) Isophorondiisocyanat | 60,05 | | | 59,47 | 57,91 | 59,68 |
| Toluylendiisocyanat[1] | | 52,06 | | | | |
| Trimerisiertes Isophorondiisocyanat[2] | | | 79,70 | | | |
| B) Hydroxyethylacrylat | 25,15 | 34,70 | 16,89 | | | 31,18 |
| Hydroxyethylmethacrylat | | | | 24,38 | | |
| 4-Hydroxybutylacrylat | | | | | 27,05 | |
| C) Trimethylolpropan | 14,80 | 13,24 | 3,41 | 16,15 | 15,04 | |
| Pentaerythrit | | | | | | 9,14 |
| Beginn der Erweichung des Endproduktes (°C) | 120 | 95 | 125 | 130 | 90 | 85 |
| Gehalt an Doppelbindungen (MG = 24), % | 5,21 | 7,18 | 3,06 | 4,50 | 4,51 | 6,45 |

[1] 2,4-Isomer
[2] NCO-Gehalt: 11,5 % (70 %ig in ®Solvesso 100)

Die Produkte der Beispiele 1 - 6 werden zu einem Pulver einer durchschnittlichen Korngröße von 50 µm gemahlen. Das Grobkorn von Korngrößen über 90 µm wird abgesiebt, das Pulver mit Hilfe einer Pulversprühpistole auf entfettete, doppelt dekapierte, geerdete Eisenbleche (165 x 65 x 0,8 mm) bei 90 kV Negativspannung so aufgespritzt daß nach dem Einbrennen eine durchschnittliche Filmschichtdicke von 70 µm resultiert.

a) thermische Härtung

Die Lackfilme werden bei 180°C 30 Minuten erhitzt. Danach sind die Lackfilmoberfläche hart, kratz-, wasser- und lösemittelfest.

b) Fotochemische Härtung

Jeweils 100 g der pulverisierten Polyurethane gemäß Beispielen 1 - 6 werden mit 5 g Fotoinitiator (1-Hydroxycyclohexylphenylketon) gemischt. Nach dem elektrostatischen Aufspritzen werden die Mischungen bei 140°C solange getempert, bis sie geschmolzen sind. Daraufhin werden die Platten mit einer Geschwindigkeit von 5m/min. unter einem Hanoviastrahler (80 W/cm, 10 cm Abstand) durchbewegt. Es entstehen harte, kratz-, wasser- und lösemittelfeste Überzüge.

## Patentansprüche

1. Verwendung von (Meth)Acryloylgruppen aufweissenden Polyurethanen, die innerhalb des Temperaturbereichs von 50-180° C schmelzen, einen Gehalt an olefinischen Doppelbindungen in Form von (Meth)Acryloylgruppen (berechnet als =C=C=, Molekulargewicht = 24) von 3 bis 10 Gew.-% aufweisen, und durch Umsetzung von
   A) 40-80 Gew.-Teilen einer Polyisocyanatkomponente, bestehend aus mindestens einem organischen Polyisocyanat, mit
   B) 15-50 Gew.-Teilen einer (Meth)Acryloylgruppen aufweisenden Alkoholkomponente, bestehend aus mindestens einem (Meth)Acryloylgruppen-aufweisenden, einwertigen Alkohol, und
   C) 2-20 Gew.-Teilen einer weiteren Aufbaukomponente, bestehend aus mindestens einer (Meth)Acryloylgruppen-freien Verbindung mit gegenüber Isocyanatgruppen reaktionsfähigen Gruppen
   hergestellt worden sind, als ohne Vernetzerkomponente vernetzbare Bindemittel für unter dem Einfluß von Hitze und/oder energiereicher Strahlung aushärtbare Pulverlacke.

## Claims

1. The use of polyurethanes containing (meth)acryloyl groups melting in the temperature range of from 50 to 180°C, containing from 3 to 10% by weight of olefinic double bonds in the form of (meth)acryloyl groups (calculated as =C=C=, molecular weight = 24) and prepared by the reaction of
   A) from 40-80 parts by weight of a polyisocyanate component consisting of at least one organic polyisocyanate with
   B) from 15-50 parts by weight of an alcohol component containing (meth)acryloyl groups and consisting of at least one monohydric alcohol containing (meth)acryloyl groups and
   C) from 2-20 parts by weight of another starting component consisting of at least one compound which is free from (meth)acryloyl groups and contains isocyanate reactive groups
   as binders which are cross-linkable without cross-linking components for powder lacquers which are curable under the influence of heat and/or high energy radiation.

## Revendications

1. Utilisation de polyuréthannes à groupes (méth)acryloyles qui fondent dans l'intervalle de températures de 50-180°C, présentent une teneur en doubles liaisons oléfiniques sous forme de groupes (méth)acryloyles (calculés en

   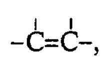

   poids moléculaire : 24) de 3 à 10 % en poids et ont été fabriqués par réaction de
   A) 40-80 parties en poids d'un composant polyisocyanate consistant en au moins un polyisocyanate organique, avec
   B) 15-50 parties en poids d'un composant alcool à groupes (méth)acryloyles, consistant en au moins un monoalcool à groupes (méth)acryloyles et
   C) 2-20 parties en poids d'un autre composant de structure, consistant en au moins un composé à groupes réactifs avec les groupes isocyanates, exempt de groupes acryloyles,
   comme liants réticulables sans composant réticulant pour vernis en poudre durcissables sous l'effet de la chaleur et/ou d'un rayonnement riche en énergie.